# EUROPEAN PATENT APPLICATION

(11) **EP 1 176 493 A2**
(43) Date of publication of application: **30.01.2002**
(21) Application number: 01610080.2
(22) Date of filing: 27.07.2001
(51) Int. Cl.: G06F 1/00, G10L 17/00

(54) **Method and system of securing data and systems**

(30) Priority: 28.07.2000 US 222468 P
(71) Applicant: Pathuel, Jan, 2730 Herlev (DK)
(72) Inventor: Pathuel, Jan, 2730 Herlev (DK)
(74) Representative: Sigh, Erik

(57) **Abstract**

A computer implemented method of providing a computer login session with a user, comprising the steps of: generating a sequence of user recognizable codes; prompting the user to orally reproduce the generated sequence of codes; recording the orally reproduction of the sequence; performing a speech and speaker analysis to identify the user and provide the user with pre-specified access privileges to the computer.

And a computer implemented method of providing secure communication between computers communicating successions of data packets via a computer network, comprising synchronisation of encryption keys generator and decryption keys generator.

## Description

This invention relates to a method of controlling a login session in a system that provides privileges to a user and a method of secure data communication.

More particularly, the invention relates to security software for the purpose of IT security functionality in multi managed protocol (MMP) public network and intra & extranet environments.

MMP comprises Virtual Private Networking (VPN). VPN is an IP based product that incorporates many types of services ie data transfer and Voice over IP (VoIP). VPN is based on creating a tunnel on a public network instead of dedicated lines.

Some common definitions for carrying Private Virtual Networks are:
- VPN for voice using PSTN; and
- VPN for data by using i.e. x.25, frame relay or ATM PDN's.

When using a VPN it is viewed as an expansion of a Remote Access function (typically PPP) over an IP network like the Internet by creating tunnelling. By use of a tunnel a remote user, uses a local POP. The call is then directed to the Remote Access server in company x through the public network. For the user it appears that he or she is connected directly to the company.

The transmission this far been based on two types of protocol, Layer-Two-Forwarding (L2F) and Point-to-Point-Tunnelling-Protocol. This however is migrating into a common protocol Layer-Two-Tunnelling-Protocol (L2TP).

Some of the problems posed with VPN are that the traffic carried within the L2TP today is subject to a security risk. The problem exists on different levels i.e. authentication and authorisation. There are various basic protocols for authorisation and authentication i.e. CHAP and TACAS+ and RADIUS. Once privileges to these protocols have been have been granted to a user, the protection of the VPN traffic relies on the encrypted tunnel.

The encryption in place is not considered safe enough. In fact VPN traffic with the right equipment can be hacked 'on the fly'. Currently, the VPN's are getting bigger and bigger. The network device manufactures are using switches that allow more traffic and more services and it is possible for the communication vendors to sell more and more traffic. Consequently, security problems have escalated.

The security problem is a compound one. Each user must have an IP Sec on their connecting computer. IP Sec is a network security protocol (within VPN on the user/client side) that ensures authentication, integrity, access control and security when transmitting IP packages over the Internet. However, security may fail in erroneously providing privileges to persons launching and using the IP Sec. Security may also fail in that an IP Sec transmission can be hacked on the LAN or WAN side of the network.

Furthermore, the prior art involves the problem that, on the one hand speaker recognition based systems may erroneously grant privileges to an intruder that plays back a recording of the voice of a person entitled to privileges. On the other hand speech recognition systems may fail in that the user has to remember a code.

### Summary of the invention

The above mentioned problems are solved when the method mentioned in the opening paragraph comprises the steps of: generating a code; providing the user with the generated code; sampling an oral reproduction of a code, wherein the oral reproduction is provided by the user; performing speaker and speech analysis to identify the user and recognize the oral reproduction of the code; determining whether the generated code and the oral reproduction of the code match, and if they match providing privileges to the user.

Thereby the user is provided with a code which - immediately after it is provided to the user - can be repeated by the user. More sessions between a system and a user will run smoothly and thus improve operability in that fewer sessions must be handled as exceptions originating from a user being unable to remember a code.

When the code is generated as a random or pseudo-random code it will be impossible or at least almost impossible to play back a recording of the voice of a person with privileges to erroneously or even thievishly gain privileges.

Preferably, the code is generated between two consecutive login sessions. The code may be generated immediately after a user request.

When the method is invoked in response to an oral user request, very compact user interface means can be used, ie no display or keyboard is needed for granting privileges. Thereby the method can be implemented at places normally not allowing for an advanced user interface: for instance in car doors for providing access privileges to a car.

Since speech and speaker analysis is a relatively complex processing task, the method preferably comprises a step of sampling an oral reproduction of the user request; wherein samples of the user request is used as input to a pre-analysis in a process of identifying the user.

The pre-analysis is preferably a speech-independent analysis to identify a subset of speakers. Thereby the pre-analysis can be carried out despite words/sounds reproduced by the user/speaker not being recognizable.

The samples of the oral reproduction of the code are used to refine the pre-analysis to identify the speaker as a unique user. Thereby the processing task is temporally distributed such that the user perceives a faster processing time/response time.

In a preferred embodiment the code is generated from samples of the oral user request. This allows for controlling the pseudo-randomness used in generating the codes.

The code may comprise words, letters, numbers, or sounds/references to sounds. Correspondingly, a user may provide a pronunciation of a word, letter, number or sound to gain the privileges. The pronunciation must be in specified languages.

In an expedient embodiment the request is processed to identify a specified function by performing a speech analysis on samples of the oral request to identify and activate the specified function. Such an oral request could be 'open door' resulting in activation of a function of opening a specified door; 'start internet browser' resulting in an Internet browser being started on a computer, etc.

If a system provides different functions that should be restricted to different groups of users, it is convenient to be able to determine whether the identified user has privileges to the specified function; and to deny access if the user does not have privileges to the specified function. An administration function may be provided to associate privileges with different users and functions.

For instance during booting a system, it may be convenient if the method is invoked automatically in a state of the system by prompting the user to orally reproduce the generated code.

Alternatively or additionally the method may be invoked at timed intervals. This further increases security.

When the method further comprises the step of transmitting data from a first computer to a second computer via a network the privileges to transmit data may be restricted to specified users.

In order to secure data transmissions effectively the method preferably comprises the steps of: generating a first sequence of encryption keys at a first computer connected to the computer network; generating a second sequence of encryption keys at a second computer connected to the computer network; wherein the first and second sequences are synchronized to produce identical sequences of encryption keys, which sequences are temporally pseudo-random; and encrypting data at a transmitting computer with a key in the first sequence; transmitting the encrypted data to a receiving computer; and decrypting the encrypted data packet with a corresponding key from the second sequence. Thereby encryption keys can be changed frequently. This greatly enhances the security of a transmission.

It is preferred that the privileges are required for encrypting and transmitting data.

When the privileges are required for decrypting, the encrypted data security is enhanced at a receiver side.

Moreover, the invention relates to a computer readable medium encoded with a program for carrying out the method when run on a computer, and a computer program product for carrying out the method when run on a computer.

The invention also relates to a system having means for carrying out the method.

Further the invention relates to a method of providing secure communication between computers communicating data via a network, comprising the steps of: generating a first sequence of encryption keys at a first computer connected to the computer network; generating a second sequence of encryption keys at a second computer connected to the computer network; wherein the first and second sequences are synchronized to produce identical sequences of encryption keys, which sequences are temporally pseudo-random; and encrypting data at a transmitting computer with a key in the first sequence; transmitting the encrypted data to a receiving computer; and decrypting the encrypted data packet with a corresponding key from the second sequence.

It is preferred that the step of encrypting data is initiated upon a request by a user with specified privileges.

The invention will be explained more fully below in connection with a preferred embodiment and with reference to the drawing, in which:
fig. 1 shows a block diagram of a computer system utilizing speech recognition for controlling a user's access privileges to a computer;
fig. 2 shows a block diagram of a computer/network system for receiving and/or transmitting data according to the invention;
fig. 3 shows a flowchart for a method of verifying a user identity in a login session by means of speaker and speech recognition;
fig. 4 shows a first flowchart for a method of a login session in a computer;
fig. 5 shows a flowchart for a method of transmitting data via a network;
fig. 6 shows a flowchart for a method of receiving data via a network;
fig. 7 shows a second flowchart for a method of a login session;
fig. 8 shows a second flowchart for a method of a login session; and

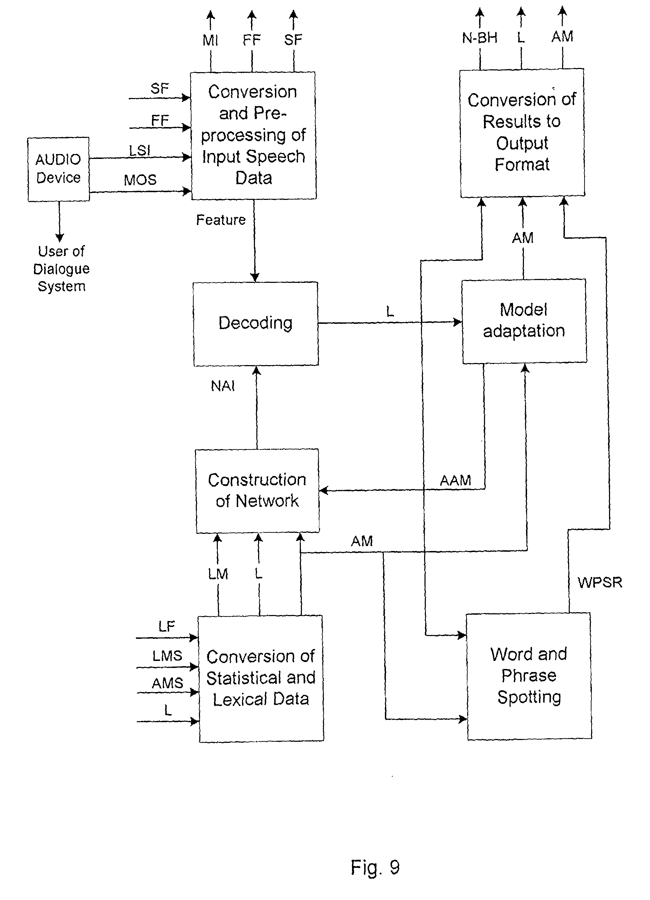

fig. 9 shows a block diagram of a so-called SLANG speaker/speech recognition algorithm.

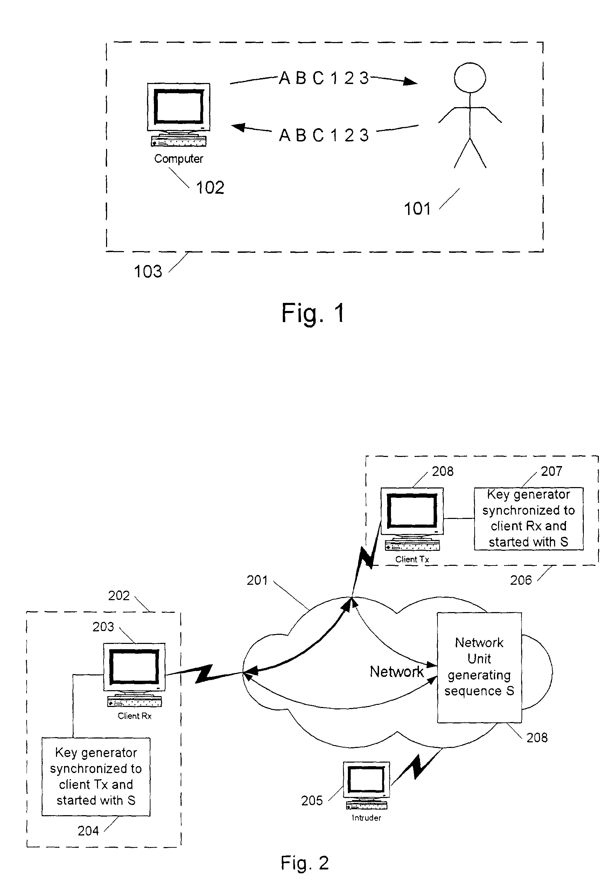

Fig. 1 shows a block diagram of a computer system utilizing speech recognition for controlling a user's access privileges to a computer. Basically, a computer 102 has speaker and speech recognition means for determining whether a user 101 has access privileges to the computer system. In a login session to the computer, the user is prompted to speak a code e.g. "A B C 1 2 3". The code may comprise elements in the form of words, letters, numbers, or a reference to a sound. The computer will then determine whether the voice of the speaker is known by the computer, and whether the prompted code matches the spoken code. This requires that the elements of the code are recognizable by the computer. The codes may be determined to match if a user's utterance of the spoken code is recognised as the prompted code, ie the code was repeated correctly. A code can be prompted by audio and/or display means. The prompt can be activated by means of a keyboard, voice recognition means, proximity means detecting whether a user is present, etc.

If the codes are ascertained to match, the user is subsequently enabled with pre-specified access privileges.

The privileges can be granted by a computer that provides privileges to resources/functions/applications of the computer. Typically, this includes privileges to a computer network. In alternative embodiments the computer is used to provide privileges to other means such as cars, houses and office buildings, or remote controlled devices.

Fig. 2 shows a block diagram of a computer/network system for receiving and/or transmitting data. Generally, it is assumed that Wide Area Networks 201 are involved with the risk that different types of intruders 205 are trying to capture data transmissions between other users 202 and 206 of the network. Such a network 201 may be the Internet or a Virtual Private Network. However, this risk can be diminished.

According to the invention users can communicate, comprising transfer/receive/exchange of data, with each other by means of encoding and decoding devices changing an encryption/decryption key dynamically according to a sequence generated by a synchronised transmitting computer and an authorized receiver or multiple authorised receivers.

Prior to communication a transmitting client 208 and a receiving client 203 exchange a secret sequence S. This sequence may be generated be a network unit and supplied to the transmitting and receiving clients. This sequence S is subsequently used to initialise the two key generators 207 and 204. According to the invention these key generators are arranged to generate identical sequences of keys that are temporarily random provided they are initialised with identical sequences. These temporarily random keys are used to encrypt and decrypt the data to be transmitted. Thereby only the transmitting client and the receiving client knows the encryption/decryption keys.

It is possible for the communicating clients to receive the initialising sequence from a network unit 208 or to agree on an initialising sequence manually isolated from the computer network.

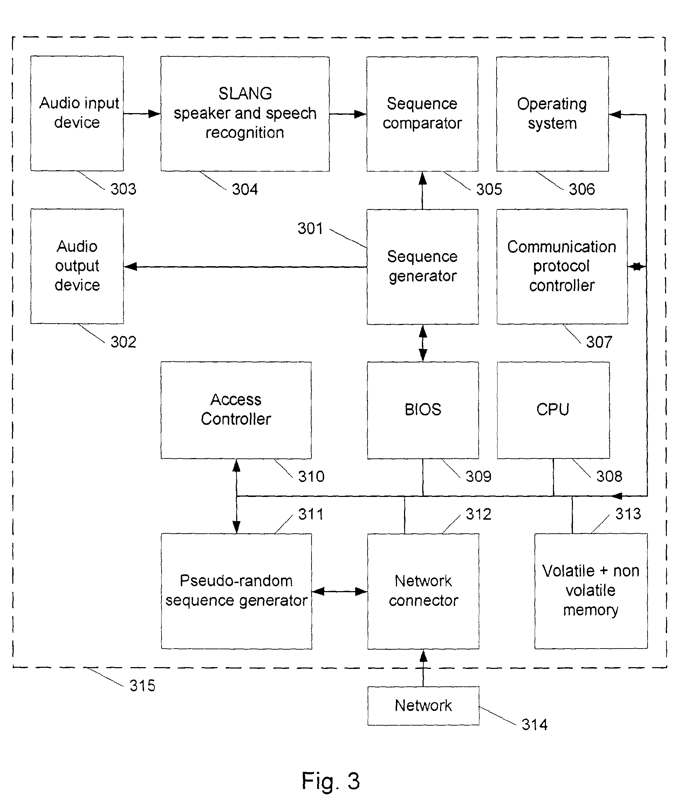

Fig. 3 shows a block diagram of a computer system 315 for receiving and/or transmitting data according to the invention. When the computer system 315 is booted by a user the sequence generator 301 generates an arbitrary sequence of word, phrases, letters and/or numbers to be communicated to the user by means of an audio output-device 302 (alternatively, the sequence can be displayed on a computer display). In response thereto the user repeats the sequence to be recorded by an audio input device 303 comprising a microphone (not shown). The recorded sound is provided as input to a so-called SLANG algorithm 304 (see www.cpk.auc.dk for further details). The SLANG algorithm is capable of recognising the user by identifying information in the sound signal being unique to a single human being based on pre-recorded voice signals from that user (i.e. so-called speaker recognition). Further, the SLANG algorithm is capable of carrying out speech-recognition. The output from the SLANG algorithm is thereby capable of reproducing the sequence spoken by the user.

A sequence comparator 305 is invoked to compare the sequence reproduced by the SLANG algorithm 304 and the sequence generated by the sequence generator 301. In response to the comparison it is determined whether the user has responded with the sequence he was prompted to respond with.

An access controller 310 is connected to the SLANG algorithm and the sequence generator to determine which user is trying to access the computer system. If the speaker is recognized, the controller looks up a table with access privileges to enable the user with corresponding access privileges. Information about the access privileges is provided to the operating system 306 utilizing this information for administering the privileges to computer system resources. The operating system is stored in volatile/non-volatile memory 313 and run by the CPU 308.

A BIOS (Basic Input Output System) 309 is actually the first device started when a user tries to gain access to the computer 315, this in turn invokes the sequence generator 301 and the access controller 310.

In case a user wants to connect to a computerized network service via a network connector 312 connected to a network 314 a pseudo-random generator 311 is controllable from an authorized network device.

A network device can be connected to the network or being a part of the network e.g. a router, a switch, a firewall, a multi-plexer, hub, another computer including a client or server computer.

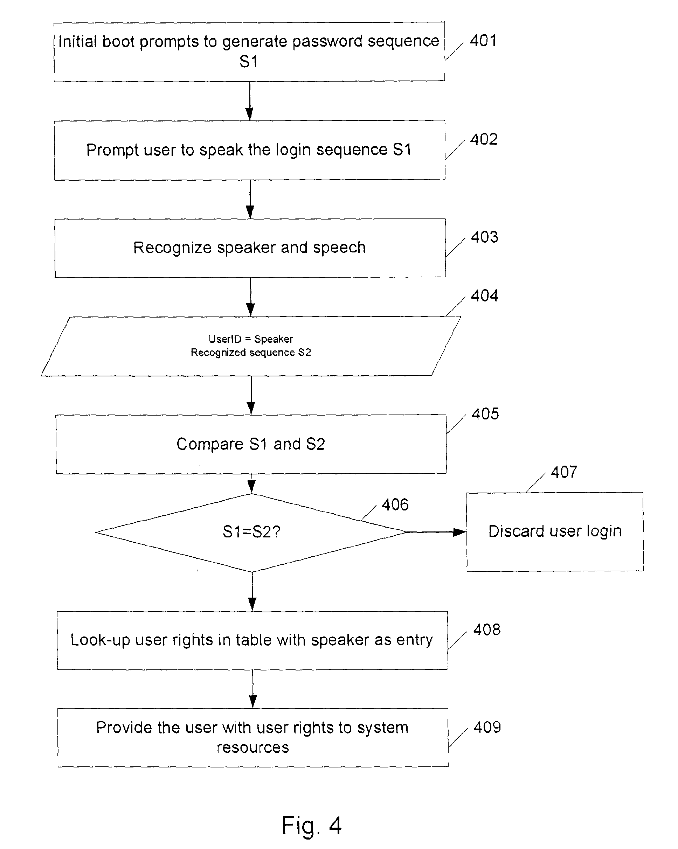

Fig. 4 shows a flowchart for a method of a login session in a computer. In step 401 a state of booting the computer activates that a code S1 is generated. Subsequently, a user is prompted to pronounce the code S1 in step 402. The speech is sampled and stored for analysis. In step 403 a process of performing speaker and speech analysis is carried out on the sampled speech. If the speaker/user is recognised the speaker is associated with a user ID. If moreover the speech of the speaker is recognised a representation of the speech or the spoken code is stored as a code S2.

In step 405 and 406 it is ascertained whether S1 and S2 match eg by examining whether S1 is equal to S2. If S1 and S2 do not match the user is discarded in step 407. This may involve allowing the user to access a predefined number of times eg 3 times.

If S1 and S2 do match user-rights or privileges granted the user is looked-up in step 408, eg in a database. Finally, the user is provided with privileges or rights to system resources.

It should be noted that the term code also is referred to as a password.

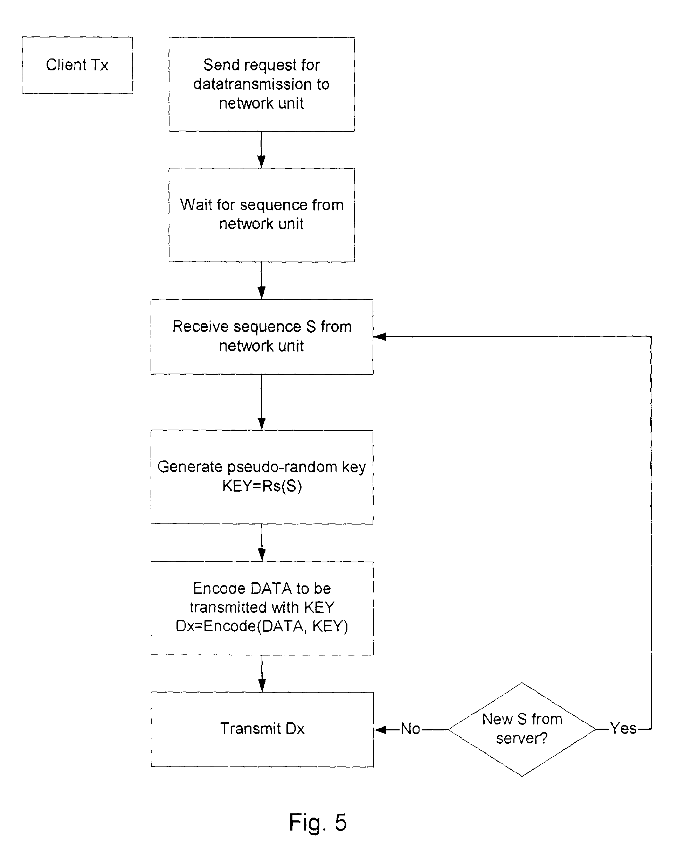

Fig. 5 shows a flowchart for a method of transmitting data via a network. In step 501 a request for a data transmission is sent from a client to a network unit. In step 502 the client is waiting for a sequence S from the network unit, and in step 503 the sequence S is received. Based on the sequence S a pseudo-random encryption key KEY is generated. In step 505 the data DATA to be transmitted from the client is encrypted by means of the key KEY. The resulting encrypted data are transmitted to a specified receiver in step 506. If, during transmission of data, a new sequence S is received from the network unit the method resumes at step 503 via step 507.

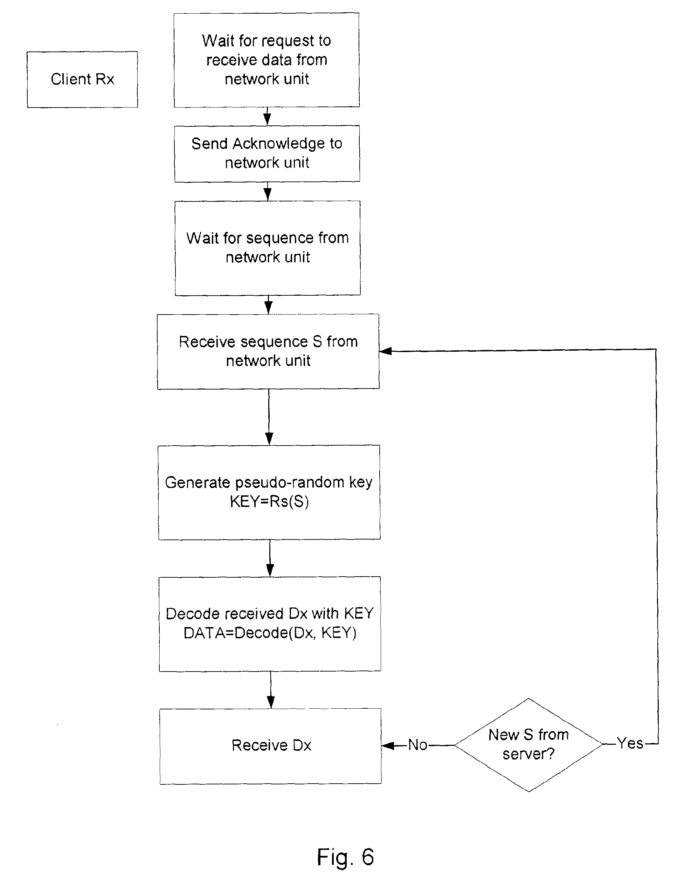

Fig. 6 shows a flowchart for a method of receiving data via a network. In step 601 a client waits for a request from a network unit to receive data. In step 602 the client transmits an acknowledge signal to the network unit when the client is prepared to receive the data. Subsequently, in step 603 the client is waiting for a sequence S from the network unit, and in step 604 the sequence S is received.

Based on the sequence S a pseudo-random decryption key KEY is generated in step 605. In step 606 encrypted data DATA to be received from another tranmitting client is decrypted by means of the key KEY. In step 607 the client continues to receive encrypted data as long as encrypted data arrives according to a specified protocol.

The resulting encrypted data are transmitted to a specified receiver in step 506. If, during receipt of data, a new sequence S is received from the network unit the method resumes at step 503 via step 507.

In an alternative embodiment a client may host the role of the network unit: ie to issue sequences for generating encryption/decryption keys.

Communication between a client and a network unit is established by means of known computer communication techniques.

Generally, it should be noted that synchronisation between communicating parties can be maintained by counting the number of data packets received and transmitted, giving each packet an identification number etc, a time stamp, etc.

Moreover, it should be noted that the pseudo-random generator should be selected to be characterized in that:
- it can be started with an initialisation parameter; and
- it can produce (large) random temporal sequences of numbers (encryption keys); and
- it can produce reproducible sequences.

A simple example of generating synchronized key sequences - not fulfilling the above criteria and only illustrating the synchronised sequence generation principle:

In a very simple example the starting sequence exchanged between two communicating clients/users may be the sequence {2,3} instructing the synchronized algorithms to take the number '2' and generate encryption/decryption keys by adding the number '3' to '2' repeatedly. The result of the add-operation being used as encryption/decryption keys as the sequence {2,5,8,11,14,...}. Assuming that an intruder isn't able to mirror this add-algorithm which in a practical embodiment is for more complex, and/or that he doesn't know the sequence {2,3} a secure communication scheme is developed. However, it should be stressed that this example is very very simple.

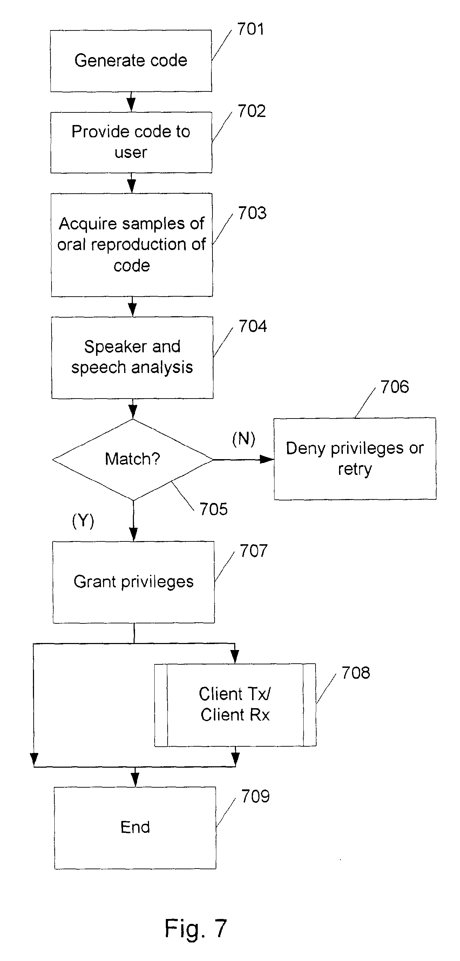

Fig. 7 shows a second flowchart for a method of a login session. In step 701 a code is generated randomly or pseudo-randomly and provided to a user in step 702. The code may be provided by means of audio means, display means or by other suitable means. In step 703 samples of what is assumed to be a user's oral reproduction of the code are acquired. In step 704 the samples are processed to identify the speaker ie the user and recognise the spoken code. If a match between the code provided to the user and the recognised code reproduced by the speaker match each other (Y) privileges for using a systems resources is granted in step 707. Alternatively, if the codes did not match access privileges are denied in step 706.

Grant of privileges to a system's resources can comprise access to transmit or receive data securely via a computer network. The method terminates in step 709.

The method can be invoked and resume at step 701 upon a user request or a system request.

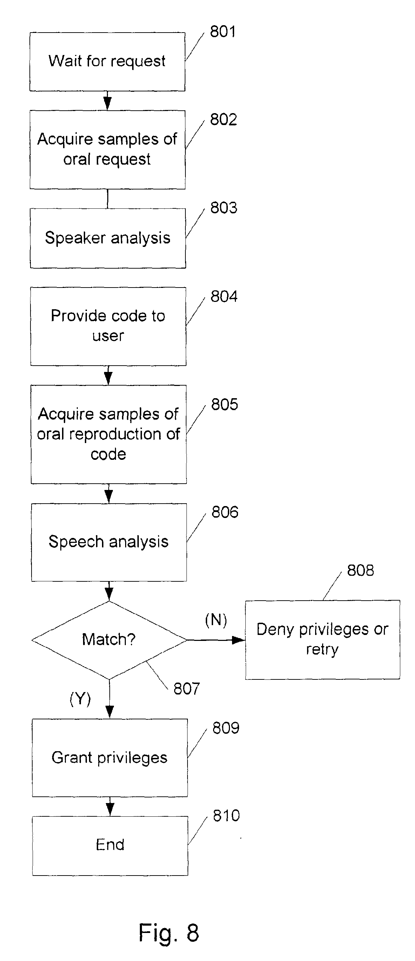

Fig. 8 shows a second flowchart for a method of a login session. In step 801 the method waits for an oral user/speaker request. When a request is detected samples of the oral request are acquired in step 802. Based on these samples a process of trying to identify the user/speaker is carried out/initiated in step 803. Subsequently or concurrently, a code is provided to the user/speaker in step 804.

In step 805 samples of what is assumed to be a user's oral reproduction of the code are acquired. In step 806 the samples are processed to recognise the spoken code. If a match between the code provided to the user and the recognised code reproduced by the speaker identified in step 803 matches each other (Y) privileges for using a systems resources is granted in step 809. Alternatively, if the codes did not match access privileges are denied in step 808. The method terminates in step 709.

If a unique speaker cannot be identified in step 803, samples of the oral reproduction of the code may be used to identify the speaker uniquely. Additionally or alternatively, the process in step 803 may be provided with more processing power and/or time.

The method can be invoked and resume at step 701 upon a user request or a system request.

Turning into details about the SLANG algorithm:

Speech recognition is one of the key research areas within the Speech Communication group at CPK and it is therefore important to have available a flexible and extendible state-of-the-art recognition system. The SLANG research system is developed to make available an environment aimed for conducting structured spoken language research with focus on (near) real-time medium-to-large vocabulary real-world continuous speech recognition applications.

CPK is currently establishing the infrastructure spoken language resources required to build next generation flexible vocabulary speech recognisers (see www.cpk.auc.dk/speech/acquisition_of_spoken_language.html ). The purpose of the SLANG research system is therefore also to provide the necessary environment to exploit the spoken language resources.

The SLANG research system provides both an experimental continuous speech recognition platform and a recogniser available as a component in a real-world spoken language dialogue system. This implies the need to pay special attention, in the implementation, to handling of barge-in, noise-robustness in real environments, on-line speaker adaptation etc. An overall diagram of the SLANG system is shown in Figure A.

So far spoken language dialogue systems and development tools have been based on the assumption that a dialogue can be viewed as a concatenated sequence of well defined sub-grammars, each constraining the recogniser at a particular state within the dialogue. The present implementation is also an attempt to take into account future more advanced constraining mechanisms as a basis for improving the recogniser performance during execution within a dialogue system.

HTK is a powerful and wide-spread tool for the development and testing of Hidden Markov Model based speech recognizers. Given the fact that HTK has been used at CPK for several years and that it represents a state of the art implementation, the SLANG system will support HTK 2.0 speech files formats as well as HTK 2.0 file formats for acoustic models.

Although the SLANG algorithm is preferred other speaker and speech recognition algorithms can be used according to the invention. US patent no. 6,076,054 discloses methods and apparatus for generating speaker dependent speaker recognition.

Generally, the invention may be embodied as a computer program or a part of a computer program, which may be loaded into the memory of a computer and executed therefrom. The computer program may be distributed by means of any data storage or data transmission medium. The storage media can be magnetic tape, optical disc, compact disc (CD or CD-ROM), mini-disc, hard disk, floppy disk, ferro-electric memory, electrically erasable programmable read only memory (EEPROM), flash memory, EPROM, read only memory (ROM), static random access memory (SRAM), dynamic random access memory (DRAM), ferromagnetic memory, optical storage, charge coupled devices, smart cards, etc. The transmission medium can be a network, e.g. a local area network (LAN), a wide area network (WAN), or any combination thereof, e.g. the Internet. The network may comprise wire and wire-less communication links. Via the network a software embodiment (i.e. a program) of the invention, or a part thereof, may be distributed by transferring a program via the network.

Further, it should be stressed that the invention by no means is limited to the described preferred embodiment.

The methods according to the invention can interface via compliant API's to know systems such as WINDOWS NT, UNIX and LINUX.

Although the above description has mentioned VPN the invention is by no means limited to VPN.

The foundation of the technical solution is based on resolving the following:
- Generating private key by the user (K1)n+1
- Generating private key by the host (K2) n+1
- Black Box (U) (key generator)
- Generic Network device (GN)
- (speech and speaker recognition i.e. by word spotting or prompting)
- Priority control (MP)
- Synchronizing keys (KS) of (K1) n+1 & (K2) n+1
- Verification (V)
- Authentication (A)
- Verification (V1) of (K1) n+1 & (K2) n+1
- Authentication (A1) of (K1) n+1 & (K2) n+1
- Time sequence code kill (T)
- Autorization (AU)
- IP transmission (I) (Internet, intra or extranet i.e. VPN)

The above mention offers total security based on the fact that the key generated codes only exists once, cannot be simulated and becomes useless if stolen. Further the key generated codes cannot be manipulated, reused or used for pattern recognition for purpose of imposing as an authorised user on the net.

Very simplified how a connection according to the invention can be described as follows:

User 1 and User 2 communicates in an encrypted environment. When they log-on the computer ask the user to speak a word or number sequence. This will always be randomised. To start a transmission Keys (codes) are generated. These are synchronized and verified by the company or ISP server which allows the transmission to take place. If the code that authorises the transmission is intercepted the code dies.

The solution is self explanatory when using Voice over IP since words are generated by the mere course of a phone conversation. When transferring data, the computer will simply prompt the user to say different words or number sequences. This means that if a transmission is intercepted after the log-on procedure has taken place the continuously flow of keys will lock out the interceptor and make the intercepted data useless. The key generation at the user site has been designed so that key are generated outside the operating system environment (i.e. Windows) and thereby- eliminating a majority of hacker tools (More than about 90% of hacker tools are designed to interfere in the operating system (so this in itself is important)).

A method according to the invention will work in an IP environment, therefore it can be used for other types of actions than described in the above model i.e. it will be able to work in controlling html documents.

## Claims

1. A method of controlling a login session in a system that provides privileges to a user, comprising the steps of:
generating a code;
providing the user with the generated code;
sampling an oral reproduction of a code, wherein the oral reproduction is provided by the user;
performing speaker and speech analysis to identify the user and recognize the oral reproduction of the code;
determining whether the generated code and the oral reproduction of the code match, and if they match providing privileges to the user.

2. A method according to claim 1 wherein the code is generated as a random or pseudo-random code.

3. A method according to claims 1 or 2 wherein the code is generated between two consecutive login sessions.

4. A method according to claim 1 wherein the method is invoked in response to an oral user request.

5. A method according to claim 4 further comprising the step of sampling an oral reproduction of the user request; wherein samples of the user request is used as input to a pre-analysis in a process of identifying the user.

6. A method according to claim 5 wherein the samples of the oral reproduction of the code is used to refine the pre-analysis to identify the user.

7. A method according to claim 4 wherein the code is generated from samples of the oral user request.

8. A method according to claim 4 wherein the code comprises words, letters, numbers, or a reference to a sound.

9. A method according to claim 4 wherein the request is processed to identify a specified function by performing a speech analysis on samples of the oral request to identify and activate the specified function.

10. A method according to claim 9 further comprising the step of determining whether the identified user has privileges to the specified function; and denying access if the user does not have privileges to the specified function.

11. A method according to claim 1 wherein the method is invoked automatically in a state of the system by prompting the user to orally reproduce the generated code.

12. A method according to claim 1 wherein the method is invoked at timed intervals.

13. A method according to claim 1 further comprising the step of transmitting data from a first computer to a second computer via a network.

14. A method according to claim 1 further comprising the steps of:
generating a first sequence of encryption keys at a first computer connected to the computer network;
generating a second sequence of encryption keys at a second computer connected to the computer network;
wherein the first and second sequence are synchronized to produce identical sequences of encryption keys, which sequences are temporally pseudo-random; and
encrypting data at a transmitting computer with a key in the first sequence;
transmitting the encrypted data to a receiving computer; and
decrypting the encrypted data packet with a corresponding key from the second sequence.

15. A method according to claim 14 wherein the privileges are required for encrypting and transmitting data.

16. A method according to claim 14 wherein the privileges are required for decrypting the encrypted data.

17. A computer readable medium encoded with a program for carrying out the method as set forth in any of claims 1 through 16 when run on a computer.

18. A computer program product for carrying out the method as set forth in any of claims 1 through 16 when run on a computer.

19. A system having means for carrying out the method as set forth in any of claims 1 through 16.

20. A method of providing secure communication between computers communicating data via a network, comprising the steps of:
generating a first sequence of encryption keys at a first computer connected to the computer network;
generating a second sequence of encryption keys at a second computer connected to the computer network;
wherein the first and second sequence are synchronized to produce identical sequences of encryption keys, which sequences are temporally pseudo-random; and
encrypting data at a transmitting computer with a key in the first sequence;
transmitting the encrypted data to a receiving computer; and
decrypting the encrypted data packet with a corresponding key from the second sequence.

21. A method according to claim 20 wherein the step of encrypting data is initiated upon a request by a user with specified privileges.

22. A method according to claim 20 wherein data are transmitted in packets.

23. A computer readable medium encoded with a program for carrying out the method as set forth in any of claims 20 through 22 when run on a computer.

24. A computer program product for carrying out the method as set forth in any of claims 20 through 22 when run on a computer.

25. A system having means for carrying out the method as set forth in any of claims 20 through 22.
